# EUROPEAN PATENT APPLICATION

(11) **EP 1 057 528 A1**
(43) Date of publication of application: **06.12.2000**
(21) Application number: 00111536.9
(22) Date of filing: 30.05.2000
(51) Int. Cl.: B01J 19/30, B01J 35/04

(54) **Articles for forming a wide surface of exchange between fluids, usable as packing bodies, support for catalysts, and elements for accelerating fluids, and systems made with said articles**

(30) Priority: 02.06.1999 IT MI991236
(71) Applicant: PETRILLO, Giacinto, 22070 Guanzate (Como) (IT); Petrillo, Giovanni Luca, 22070 Guanzate (Como) (IT); Petrillo, Mattia Riccardo Giacinto, 22070 Guanzate (Como) (IT)
(72) Inventor: PETRILLO, Giacinto, 22070 Guanzate (Como) (IT); Petrillo, Giovanni Luca, 22070 Guanzate (Como) (IT); Petrillo, Mattia Riccardo Giacinto, 22070 Guanzate (Como) (IT)
(74) Representative: Petruzziello, Aldo

(57) **Abstract**

The article comprises an outer wall (12), which is closed in a watertight manner, provided with an internal corrugated surface, internal walls which define between them and the outer wall passages for the fluid, and two or more mouths (13,15) equipped with spigot-and-socket connection means. Preferably, also the internal walls have a corrugated, or in any case non-smooth, surface. Preferably, the internal walls have a helicoidal shape with two or more helix portions (20a,20b) set symmetrically.

Such articles are usable as packing bodies, support for catalysts and elements for accelerating fluids.

Also forming the subject of the invention are structures made with a number of elements connected together.

## Description

The invention refers to the field of operations of exchange between fluids, such as between liquids and gases, liquids and liquids, liquids or gases and fluidified flows of solids. As examples of these, the following may be mentioned: liquid/gas absorption/desorption, stripping of substances contained in a liquid through an appropriate current of gas, distillation of elements, mixing of liquids together, mixing of liquids with gases or with solid particles, mixing of flows of solids having different grain sizes and weights.

The state of the art comprises various types of elements for these functions, for example a component element or packing element as the one described in Italian patent No. 1 240 642. This prior patent describes a filling or packing body which has an outer cylindrical wall provided with wide elongated slot-like openings, and an internal wall having a helicoidal shape. Although the above device has obtained excellent results, nevertheless, in an endeavour to achieve a still greater improvement, the article that forms the subject of the present application, as specified in the attached Claim 1, has been obtained. Also forming a subject of the present invention is a system as specified in Claim 11.

Further characteristics and variants of said articles are set forth in the dependent claims.

The new articles achieve a better exchange between flows of liquids and/or aeriform substances and/or fluidified solids than any other article of the prior art. In addition, they present a high degree of versatility in terms of assembly and use.

The articles according to the invention will be described in what follows with reference to the attached figures, in which:
Fig. 1 is a perspective view of a first article, with a part broken away to reveal the underlying parts;
Fig. 2 is a plan view of the article of Fig. 1;
Fig. 3 is a side view of the article of Fig. 1;
Fig. 4 is a section along the plane 4-4 in Fig. 1;
Fig. 5 illustrates a preferred pattern of ribbing/scoring lines for the helix inside the article of Fig. 1;
Fig. 6 illustrates a preferred pattern of ribbing/scoring lines for the cylindrical internal walls of the article of Fig. 1;
Fig. 7 illustrates a column of articles according to Fig. 1 which are assembled together;
Fig. 7a illustrates a number of articles assembled to form a column with flanges;
Fig. 8 is a plan view of a preferred arrangement of a number of columns according to Fig. 7;
Figs. 9, 10 and 11 respectively illustrate in elevation, in sectional view along plane 10-10 of Fig. 9, and in sectional view along plane 11-11 of Fig. 9, a particular system made with the devices according to Fig. 1;
Fig. 12 illustrates, in a plan view similar to that of Fig. 2, a variant of the device;
Fig. 13 illustrates another variant of the device, in plan view;
Fig. 14 is a perspective view of yet another variant of the device, provided with additional connection mouths set laterally;
Fig. 15 is a perspective view of another variant of the article, which is equipped with four side mouths with their axes aligned in pairs and mutually orthogonal;
Fig. 16 is a plan view of the article of Fig. 15;
Figs. 17 and 18 illustrate, respectively in elevation and in plan view, a system that can be made with the articles of Fig. 15;
Fig. 19 is a perspective view of a further variant of the article, which is provided with six side mouths with their axes set at equal angular distances apart and set on a plane orthogonal to the longitudinal axis of the body, and which is provided with two internal elements having a helical shape:
Fig. 20 is an exploded plan view of the two articles as illustrated in Fig. 19 and of connecting sleeves and plugs for them;
Fig. 21 is a perspective view of an article similar to that of Fig. 19, but provided with three internal helical elements, instead of two, which are set at equal angular distances apart;
Fig. 22 is a plan view of the article of Fig. 21; and
Figs. 23 and 24 are, respectively, a plan view and a side elevation of a plant or system made with the articles of Fig. 19 and/or the articles of Fig. 21.

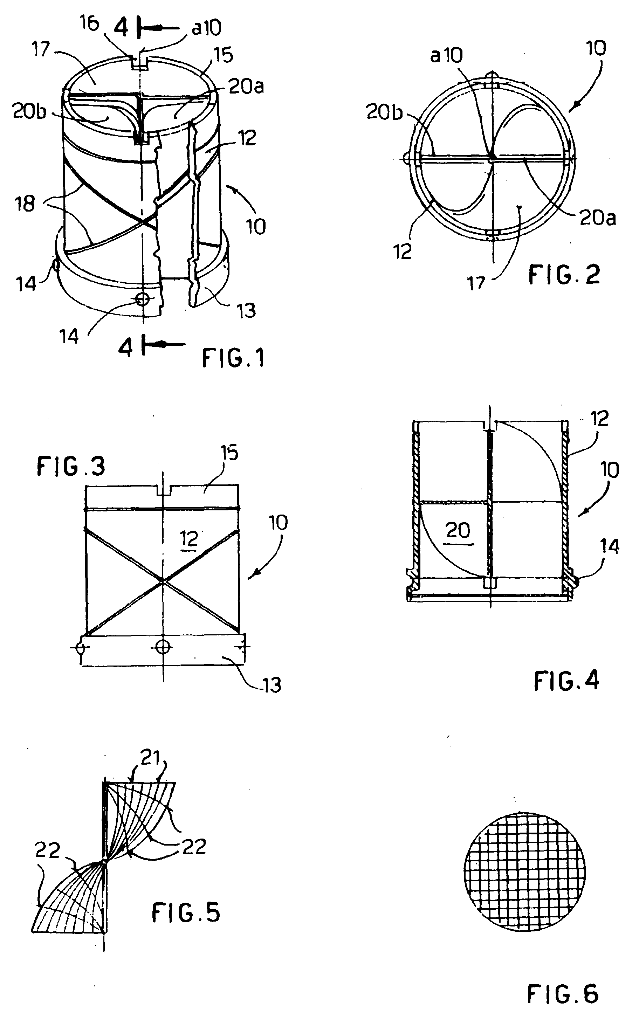

A first article according to the invention will be described with reference to Figs. 1-6. The article comprises a closed or solid outer wall 12, which is substantially cylindrical or slightly tapered. At the bases, which are open, the outer wall is made with mouths and means for connection to other similar articles. Generally a spigot-and-socket joint is provided which has a large portion 13 at one end, provided, for example, with projections 14, and a smaller diameter portion 15, at the other end, provided with slits 16. The type of mouth or connection does not in any case limit the present invention, but it is understood that the invention comprises articles that may be connected in other ways.

The outer surface of the cylindrical wall 12 may be provided with reinforcement ribbings 18 set crosswise, particularly for heavy loads.

The cylindrical wall 12 internally defines a chamber 17 which has walls for deflecting a fluid flow, which walls may have any shape whatsoever and are designated by 20.

However, even though the walls 20 may have any shape, a preferred embodiment comprises one or more helical segments 20a, 20b. The segments 20a and 20b are a symmetrical with respect to axis a₁₀ of the article body, and each of them has preferably a pitch equal to the internal diameter of the article.

The article may be made of plastic material, or metal, or ceramic material.

According to the invention, the internal surface of the cylindrical wall and/or the surfaces of the internal helical wall preferably may have ribbing lines or score lines or be corrugated to promote adherence of a liquid or fluid coming into contact with them. A preferred type of lines for the helical walls 200 is illustrated in Fig. 5 and comprises longitudinal lines 21 and transverse lines 22.

The internal surface of the cylindrical wall may be corrugated or made non-smooth in any known way, and preferably may have sets of vertical and horizontal ribs or score lines that criss-cross each other, as shown in Fig. 6.

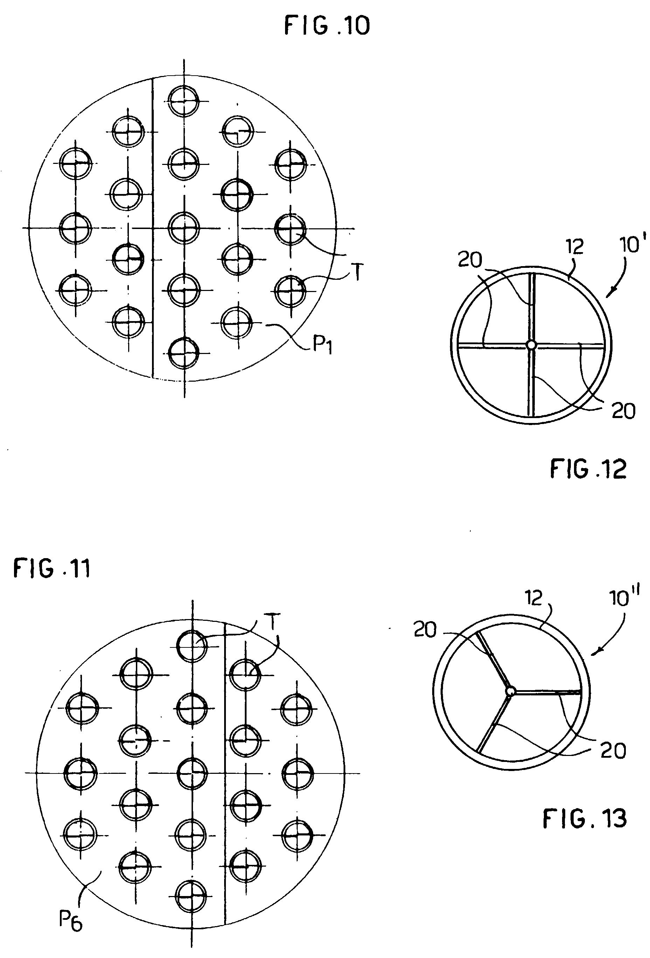

The internal helical walls 20 present equal symmetry about the longitudinal vertical axis of the device, as shown in Fig. 12, in which the device 10' has four branches of helix staggered with respect to one another by 90°, or else as shown in Fig. 13, in which the device 10'' has three branches of helix 20 staggered with respect to one another by 120°.

The articles according to the invention may be used in various ways, for example as filling or packing bodies for continuous mass transfer operation systems (MTOSs) in continuous apparatus for applications such as:
- Liquid/gas absorption/desorption
- Stripping of substances contained in a liquid phase through the use of an appropriate current of gas
- Distillation, including multicomponent distillation, of lighter elements contained in a starting mixture, also using an appropriate solvent (distillation with solvent)
- Mixing of fluids, and in particular liquid-liquid mixing and liquid-gas mixing
- Mixing of solid particles in a fluid current
- Mixing of flows of solids having different grain sizes and weights
- Film evaporators
where said applications relate to industrial applications ranging from petrochemistry to industrial chemistry, from the pharmaceutical and chemico-pharmaceutical industries (dissolution of oxygen in fermenters, reactions in the presence of oxygen or other substances) to biotechnological applications (biopercolators and bioreactors), also in the presence of multicomponent biphasic mixtures.

The articles according to the present invention may moreover be used as substrate for catalysts applied in reactions of chemical synthesis or as elements for accelerating fluids.

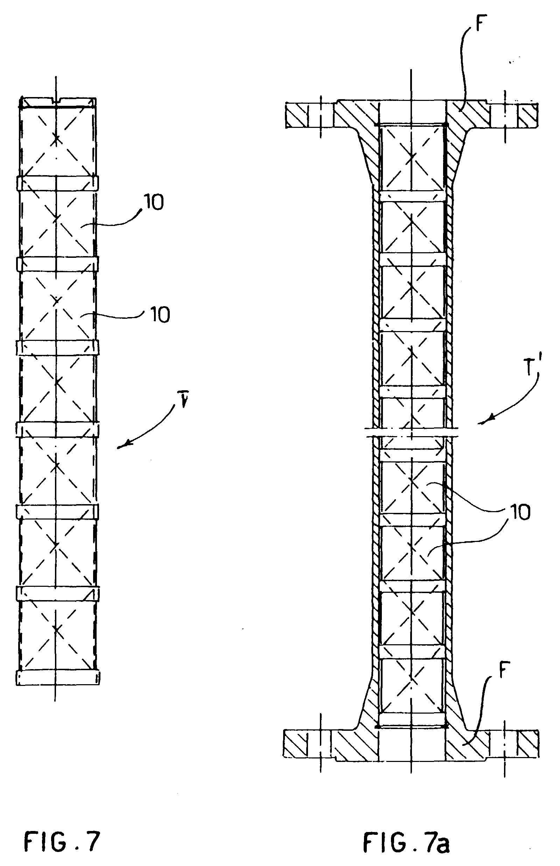

Figure 7 illustrates an example of a tower system, T, made using a number of articles 10 according to the invention, which are stacked one on top of the other and fixed together by means of the spigot ends of one engaging the socket ends of another. Fig. 7a illustrates a variant of the tower, T', with end flanges F.

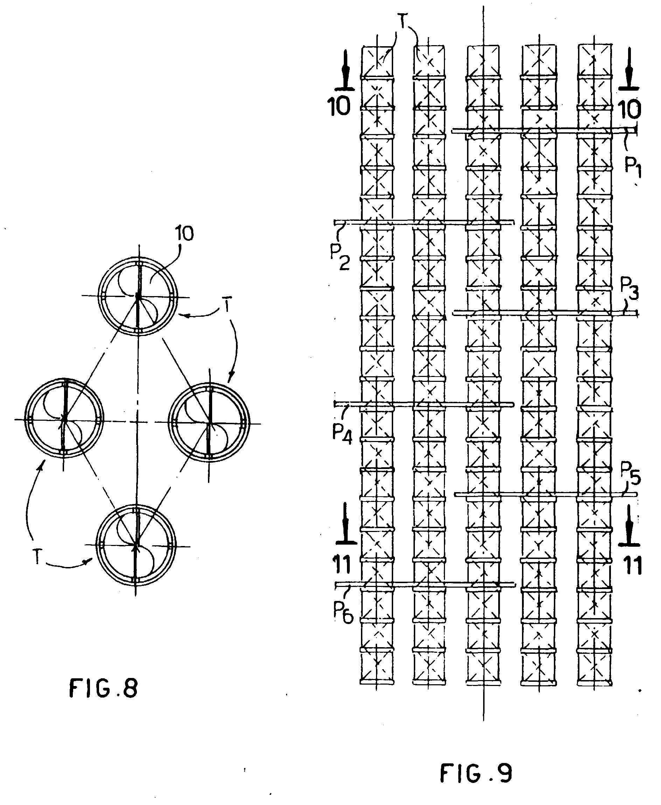

A number of towers like the one illustrated in Fig. 7 may be made to co-operate by being arranged according to any layout, such as the one illustrated in Fig. 8, in which four towers T are shown that are arranged according to a form made up of two equilateral triangles and are connected together by means of plates (not shown).

Figures 9, 10 and 11 illustrate an example of a system in which a number of towers are arranged staggered, in plan view, and are joined at intervals by means of plates P₁, P₂, P₃, P₄, P₅, P₆ which join together a certain number of towers and leave the others free. The plates are set at different heights and in staggered positions.

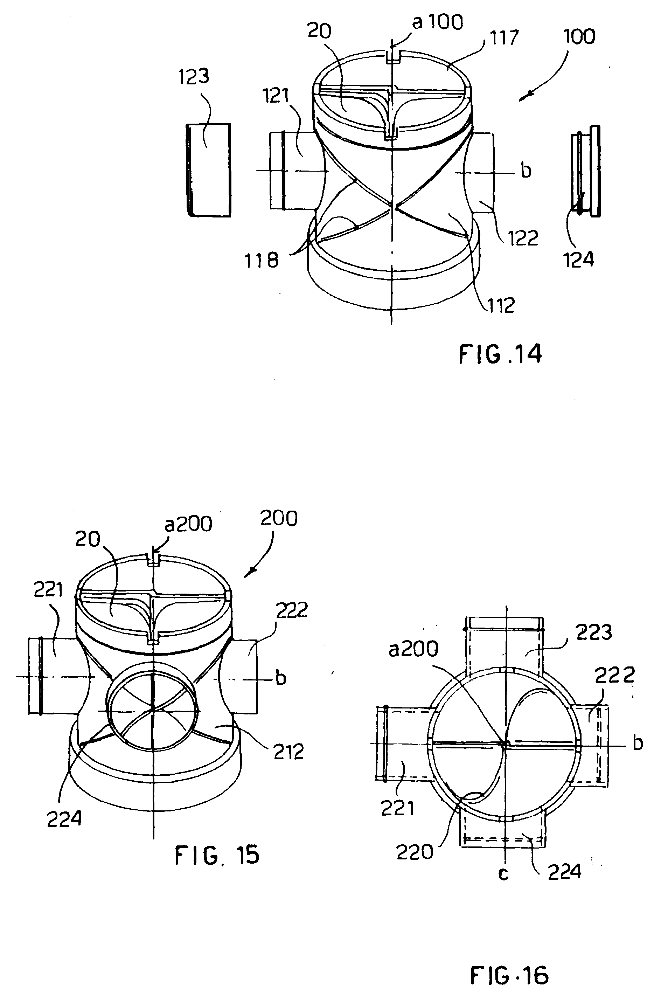

Figure 14 shows a variant of the device or article, designated by 100. The device 100 comprises a closed cylindrical wall 112 forming two base mouths and two side mouths, defined by secondary cylindrical walls 121, 122 with their axis b orthogonal to the axis a₁₀₀ of the main cylindrical wall. The chamber 117 defined internally by the wall 112 may have deflection walls 20 of any sort, as in the device 10. Auxiliary walls 121, 122 may be shaped to form a connection, for example a spigot-and-socket joint. Plugs 123, 124 may be provided for closing the side mouths.

In addition to the lateral cylindrical wall 212 and to the internal walls 220 of any kind, the device 200 of Fig. 15 has four cylindrical side mouths 221, 222, 223, 224 set aligned two by two, and each having its own axis b, respectively c, orthogonal to the axes of two other months. The devices 100 and 200 preferably have their internal walls made rough in the way described for the device 10.

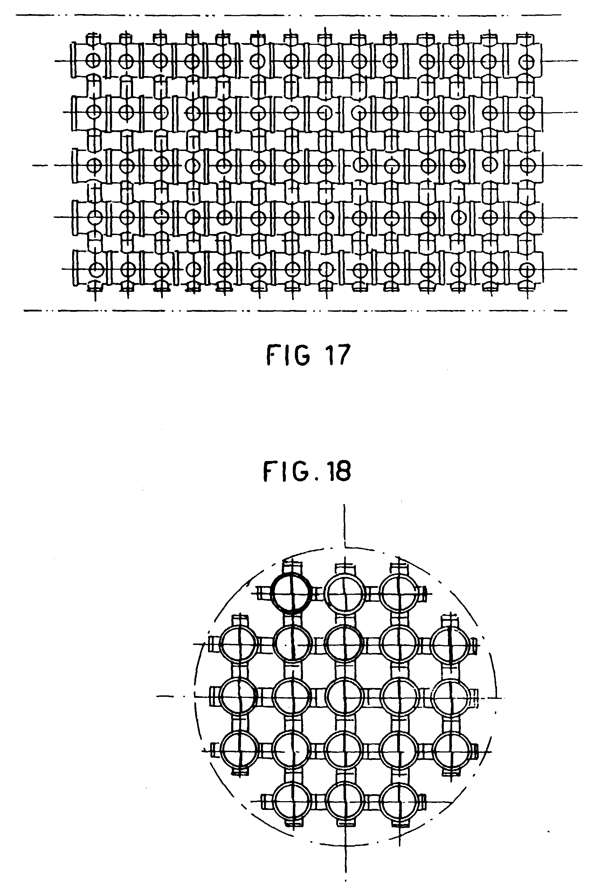

With the devices as illustrated in Figs. 15 and 16 it is possible to assemble systems like the one illustrated in Figs. 17 and 18. Here, a number of columns of devices stacked on top of one another are connected together according to two directions orthogonal to one another so as to occupy a pre-set space, for example delimited by a cylinder or the like.

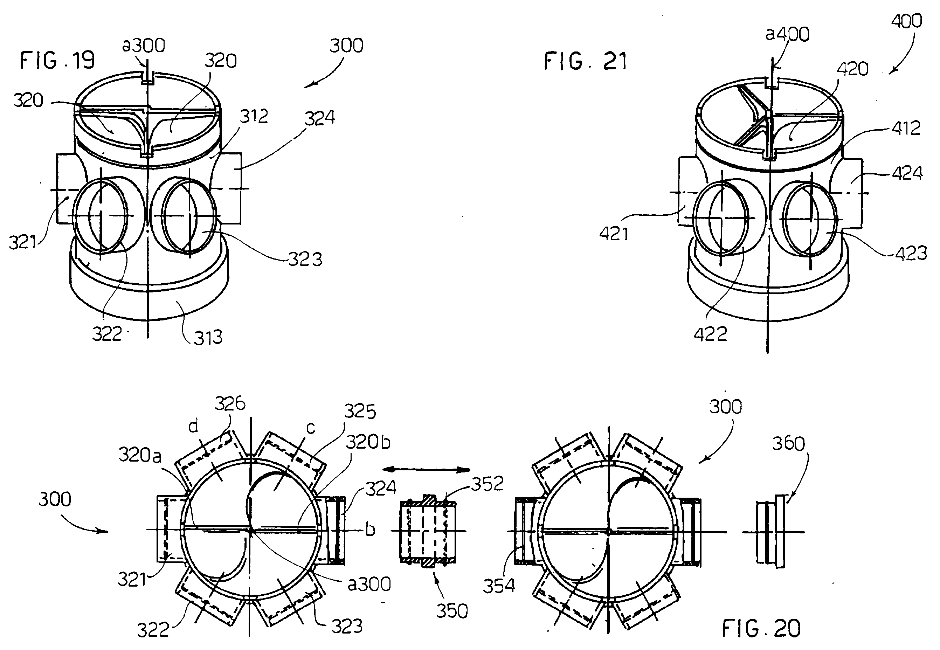

The embodiment of the article illustrated in Figs. 19 and 20 is designated by the reference number 300 and comprises a body 312 which has axial mouths and six side mouths 321, 322, 323, 324, 325, 326 arranged at regular intervals about the longitudinal axis a₃₀₀. That is, the mouths have their axes coinciding two by two, and their axes, designated by b, c, d lie in one and the same plane at angles of 60° apart. Internally the article 300 has two helical elements set at 180° apart, designated by 320, or, more precisely, by 320a and 320b.

The elements 300 can be assembled together by means of joining sleeves 350, one of which may be seen in Fig. 20. A joining sleeve 350 has retention means, such as an outer ribbing 352, designed to mesh with co-operating retention means provided on the side mouths of the article 300, such as a groove 354. Plugs 360 may be envisaged for closing one or more mouths 321-326, if so desired.

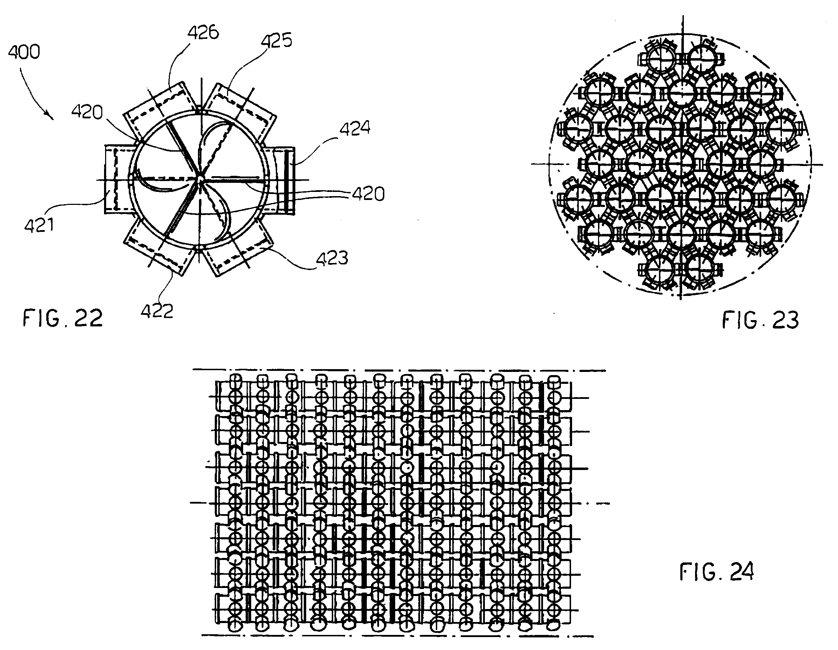

The reference number 400 in Figs. 21 and 22 designates a further variant of the article, which, in a similar way as for the variant 300 of the previous figures, has two main mouths and six side mouths 421, 422, 423, 424, 425, 426. Unlike the article 300, the article 400 has internally a helix with three sections 420 which are set at equal angular distances apart, as may be more clearly seen in the plan view of Fig. 22.

Both the article 300 and the article 440 can be assembled in a system as illustrated in Figs. 23 and 24, in which the axes of a number of articles are set according to the vertices of hexagons in plan view, and the articles are connected together by means of their side mouths.

The articles according to the invention may be made of one or more of the following materials: plastic, metal, and ceramic. They may be used to form a wide surface of exchange between fluids, may be used as packing bodies, as a substrate or support for catalysts, as elements for accelerating fluids.

## Claims

1. An article for systems operating on a flow of fluid, comprising an outer wall (12; 112; 212) with connection mouths (13, 15) at the ends, internal walls (20; 20a, 20b; 120; 220) which define passages for the fluid,
characterized in that
said outer wall is substantially solid, impermeable to the flow of fluid, except for possible additional mouths (121, 122; 221, 222) for connection to other similar articles,
and in that at least some of the surfaces of the walls, in contact with the fluid, are corrugated or undulated.

2. An article according to Claim 1, characterized in that said outer wall is cylindrical and has criss-cross ribbings (18) on its outer surface.

3. An article according to Claim 1, characterized in that the internal surfaces of the outer wall are undulated with criss-cross rib lines/score lines.

4. An article according to Claim 1, characterized in that the internal walls are for deflecting the flow (20; 20a, 20b; 120; 220) and have a shape with helicoidal elements.

5. An article according to Claim 4, characterized in that said helical elements (20; 20a, 20b; 120; 220) present a symmetry about a longitudinal axis of the article and are two, or three, or four in number, set at equal distances apart around said axis.

6. An article according to Claim 4, characterized in that the surface of said helicoidal elements is shaped with longitudinal rib/score lines (21) and transverse rib/score lines (22).

7. An article according to Claim 1, characterized in that it further comprises additional mouths (121, 122) set coaxially according an axis (b) orthogonal to the axis (a) of said first mouths.

8. An article according to Claim 7, characterized in that it comprises an additional pair of mouths with axis (c) orthogonal to the axes (a, b) of said above-mentioned mouths.

9. An article according to Claim 1, further comprising additional mouths set with their axes transverse to the axis of the main mouths, the axes of said further mouths being set at equal angular distances apart about said main mouth axis.

10. An article according to Claim 9, characterized in that it internally has flow deflecting walls in the form of helicoidal elements having a symmetry about a longitudinal axis of the article.

11. A system comprising a number of articles according to Claim 1, set stacked on top of one another.

12. A system according to Claim 11, comprising flange-shaped end elements.

13. A system according to Claim 11, in which a number of stacks of articles are arranged at the vertices of equilateral triangles as seen in plan view.

14. A system according to Claim 11, in which said articles are connected together also laterally.

15. A system according to Claim 11, in which a number of articles according to Claim 10 are connected together laterally by means of sleeves which engage side mouths of the articles.
